(19) Europäisches Patentamt
European Patent Office
Office européen des brevets

(11) **EP 1 717 568 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
***G01M 11/00*** *(2006.01)*

(21) Anmeldenummer: **06112608.2**

(22) Anmeldetag: **13.04.2006**

(54) **Verfahren zur Vermessung eines solarthermischen Konzentrators**

Method for measuring a solar thermal concentrator

Procédé destiné à la mesure d'un concentrateur thermique solaire

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.04.2005 DE 102005019367**

(43) Veröffentlichungstag der Anmeldung:
**02.11.2006 Patentblatt 2006/44**

(73) Patentinhaber: **Deutsches Zentrum für Luft- und Raumfahrt e.V.**
**51147 Köln (DE)**

(72) Erfinder: **Ulmer, Steffen**
**04007, Almería (ES)**

(74) Vertreter: **von Kreisler Selting Werner**
**Deichmannhaus am Dom**
**Bahnhofsvorplatz 1**
**50667 Köln (DE)**

(56) Entgegenhaltungen:
WO-A-02/082037    DE-A1- 10 056 077
DE-A1- 19 643 018    DE-C- 317 148
JP-A- 1 165 907    US-A- 3 518 004
US-A- 5 309 222    US-A1- 2004 169 725

- ARASA J ET AL: "Concave reflective surfaces topographic inspection using robust non-contact techniques" EMERGING TECHNOLOGIES AND FACTORY AUTOMATION, 1999. PROCEEDINGS. ETFA '99. 1999 7TH IEEE INTERNATIONAL CONFERENCE ON BARCELONA, SPAIN 18-21 OCT. 1999, PISCATAWAY, NJ, USA,IEEE, US, Bd. 2, 18. Oktober 1999 (1999-10-18), Seiten 1147-1154, XP010365741 ISBN: 978-0-7803-5670-2
- JEFFERIES K S ED - INSTITUTE OF ELECTRICAL AND ELECTRONICS ENGINEERS: "CONCENTRATOR TESTING USING PROJECTED IMAGES" AEROSPACE POWER SYSTEMS. BOSTON, AUG. 4 - 9, 1991; [PROCEEDINGS OF THE INTERSOCIETY ENERGY CONVERSION ENGINEERING CONFERENCE], NEW YORK, IEEE, US, Bd. 2, 4. August 1991 (1991-08-04), Seiten 84-89, XP000295031 ISBN: 978-0-89448-163-5

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 1 717 568 B1**

**Beschreibung**

Die Erfindung betrifft ein Verfahren zur Vermessung eines solarthermischen Konzentrators.

In solarthermischen Kraftwerken wird Solarstrahlung durch optische Konzentratoren auf einen Absorber konzentriert, um in eine andere Energieform umgesetzt zu werden. Bei Parabolrinnenkraftwerken bestehen die Konzentratoren aus langgestreckten Parabolspiegeln, die die einfallende Strahlungsenergie auf ein Absorberrohr konzentrieren. Bei Dish-/Stirling-Anlagen bestehen die Konzentratoren aus schüsselförmigen Spiegeln, in deren Brennpunkt der Absorber angeordnet ist. Ferner gibt es Heliostatanlagen aus zahlreichen leicht gekrümmten Spiegeln, die so ausgerichtet werden, dass die reflektierte Strahlung auf einen gemeinsamen Receiver trifft, der in der Regel auf einem Turm angeordnet ist. In allen Fällen handelt es sich um große Spiegel, die zur Erlangung einer hohen Energieausbeute mit großer Genauigkeit zum Konzentrator ausgerichtet sein müssen. Die Spiegel müssen in ihrer Form sehr genau der Sollform entsprechen, um Strahlungsverluste gering zu halten und eine gleichmäßige Strahlungsverteilung auf dem Absorber zu produzieren. Aus Kostengründen und technischen Schwierigkeiten weisen die Konzentratoren immer gewisse Formabweichungen auf. Diese Formabweichungen müssen zur Qualitätskontrolle und zur Wirkungsgradoptimierung sehr genau gemessen werden. Durch die großen Ausmaße der Konzentratoren (typische Werte für Parabolrinne: Aperturweite 6 m, Paraboldishes: 50 m$^2$, Heliostaten 100 m$^2$) ist es jedoch äußerst schwierig, mit vertretbarem Aufwand an Zeit und Kosten flächige Messungen mit der erforderlichen Genauigkeit im Bereich von 1 mrad Steigungsfehler durchzuführen. Die Qualifizierung der Konzentratoren beschränkt sich deshalb in der Praxis auf indirekte Messungen wie die Messung des optischen Wirkungsgrades, der produzierten Strahlungsverteilung und der Temperaturverteilung auf dem Absorber oder stichpunktartige Vermessung beschränkter Flächen.

Der Oberbegriff des Patentanspruchs 1 geht aus von einem Verfahren, das aus DE 100 56 077 B4 bekannt ist. Bei diesem Verfahren wird ein optisches Target in Form einer Leinwand, die auf beiden Seiten zahlreiche Streifen trägt, so vor einem optischen Konzentrator positioniert, dass die Fläche der Leinwand in der optischen Achse des Konzentrators liegt. Die Leinwand geht quer durch die Brennebene des Konzentrators hindurch. Im Verlaufe der optischen Achse ist eine Kamera angeordnet, die ein Bild der vom Konzentrator reflektierten Streifen der Leinwand aufnimmt. Dieses Bild erfasst die Bereich zu beiden Seiten der optischen Achse. Das Bild des Streifenmusters wird mit dessen Idealbild verglichen, das bei Vorliegen optimaler Abbildungseigenschaften zu erwarten ist.

Die hierbei feststellbaren Verzerrungen ermöglichen eine unmittelbare Bestimmung der Abbildungseigenschaften der Spiegelelemente des Konzentrators. Insbesondere kann aufgrund der Verzerrungen festgestellt werden, in welchem Bereich der Spiegelfläche eine Fehljustierung bezogen auf den idealen parabelförmigen Querschnittsverlauf vorliegt. Dieses Verfahren erfordert die Anbringung eines großflächigen Targets und ist daher sehr aufwendig. Es liefert nur einen qualitativen Vergleich und die Möglichkeit zur Justage, jedoch keine quantitative Aussage über lokale Steigungsfehler. Das Verfahren ermöglicht es, einzelne Spiegelfacetten separat nachzujustieren, es liefert jedoch keine Angaben über das erforderliche Korrekturmaß. Das Nachjustieren kann also nur unter optischer Kontrolle des durch den Kollektor projizierten Bildes erfolgen.

In DE 33 25 919 A1 ist ein Verfahren zum Überprüfen der Justierung der Einzelspiegel von Heliostaten eines Sonnenkraftwerkes beschrieben. Die Spiegel der Heliostatanlage werden von einer paralleles Licht liefernden Lichtquelle beleuchtet und mit einer Kamera abgebildet. Das Kamerabild wird hinsichtlich der Intensitätsverteilung abgetastet und mit einem Referenzbild verglichen. Die Ergebnisse der Überprüfung werden von einem Drucker ausgedruckt. Durch die ausgedruckten Ergebnisse wird angegeben, welche der zahlreichen Einzelspiegel nachjustiert werden müssen, jedoch werden Richtung und Grad des Nachjustierens nicht ermittelt.

In DE 317148 ist eine Einrichtung zur Untersuchung von Hohlspiegeln beschrieben, die dazu dient, die Reflektoren von Fahrzeugscheinwerfern aus Deformierungen zu untersuchen. Die Vorrichtung weist mehrere punktförmige Lichtquellen auf und eine senkrecht zur optischen Achse bewegliche Kamera. Die Kamera nimmt alle drei Lichtquellen gleichzeitig auf, wobei in Folge der Kamerabewegung Linien im Bild entstehen. Die Abstände der Linien voneinander bilden ein Maß für die Größe der Streuung des Reflektors an der betreffenden Spiegelstelle.

US 2004/0169725 A1 beschreibt eine Vorrichtung zur Prüfung reflektierender konkaver Flächen auf Astigmatismus. Dabei wird von der reflektierenden Fläche ein Abbild eines Punktes auf einer dünnen Glasscheibe erzeugt.

In einem Aufsatz von ARASA J ET AL: "Concave reflective surfaces topographic inspection using robust non-contact techniques" EMERGING TECHNOLOGIES AND FACTORY AUTOMATION, 1999. PROCEEDINGS. ETFA '99. 1999 7TH IEEE INTERNATIONAL CONFERENCE ON BARCELONA, SPAIN 18-21 OCT. 1999, PISCATAWAY, NJ, USA, IEEE, US, Bd. 2, 18. Oktober 1999 (1999-10-18), Seiten 1147-1154, XP010365741 ISBN: 978-0-7803-5670-2 ist eine Technik zur Durchführung topographischer Messungen an reflektierenden konkaven Flächen beschrieben, bei welcher von einem Schattenmuster, welches entsteht, wenn ein Gitter mit parallelen Linien (Ronchi-Gitter) in dem Weg einer Wellenfront angeordnet wird. Das Schattenmuster erlaubt eine präzise Messung der Wellenfront, die auf das Ronchi-Gitter fällt.

DE 196 43 018 A1 beschreibt ein Verfahren zum Messen des Verlaufs einer reflektierenden Oberfläche. Dabei wird ein definiertes Muster aus wenigstens zwei verschiedenen Lichtintensitäten auf die Oberfläche projiziert. Ein Ausschnitt aus der Oberfläche wird mit einer Kamera beobachtet und es werden Abweichungen des beobachteten Ausschnitts ausgehend von den Kameradaten ausgewertet. Die Kamera ist auf ein Spiegelbild des Lichtmusters scharf eingestellt.

In US 5,309,222 A ist eine Vorrichtung zur Inspektion von Oberflächenwellungen beschrieben, bei der Licht, das von einer gemusterten Lichtquelle ausgeht, auf die Oberfläche gelenkt und von dieser auf eine Linse und eine Blende reflektiert wird, hinter denen eine Kamera angeordnet ist. Die Übergänge zwischen den schwarzen und weißen Stellen des Musters werden zur Feststellung defekter Stellen der Oberfläche ausgewertet.

In JP 01165907 ist die Vermessung einer Spiegelfläche unter Verwendung eines linearen Strichgitters beschrieben. Das Strichgitter wird von einem Scanner auf einen Schirm projiziert. Das projizierte Muster wird von der Spiegelfläche reflektiert und das reflektierte Bild wird von einer Videokamera aufgenommen und anschließend durch Bildverarbeitung verarbeitet, um örtliche Abweichungen von der Idealform festzustellen.

In JEFFERIES K S ED - INSTITUTE OF ELECTRICAL AND ELECTRONICS ENGINEERS: "CONCENTRATOR TESTING USING PROJECTED IMAGES" AEROSPACE POWER. SYSTEMS. BOSTON, AUG. 4-9, 1991; [PROCEEDINGS OF THE INTERSOCIETY ENERGY CONVERSION ENGINEERING CONFERENCE], NEW YORK, IEEE, US, Bd. 2, 4. August 1991 (1991-08-04), Seiten 84-89, XP000295031 ISBN: 978-0-89448-163-5 ist ein Bildprojektionssystem zur Prüfung des Konzentrators einer terrestrischen Solaranlage beschrieben. Das System weist eine Tafel aus kleinen Lichtern auf, die mit einer Videokamera aufgenommen werden, deren Bild von einem Bildprozessor verarbeitet wird. Jedes Licht beleuchtet den gesamten Konzentrator, jedoch wird dieses Licht nur aus kleinen Bereichen des Konzentrators auf die Kamera reflektiert. Der Computer bestimmt die Orientierung dieser kleinen Bereiche, die das Licht zur Kamera reflektieren, auf der Basis des Ortes der kleinen Bereiche und des Ortes der Kamera. Die Lichter werden sequentiell eingeschaltet und durch Kombinieren der Orientierungen eines jeden kleinen Bereichs wird die Kontur des gesamten Konzentrators bestimmt.

Die bekannten Verfahren eignen sich nicht zur Vermessung eines solarthermischen Konzentrators mit großen Oberflächen und zu einer schnellen Gütebestimmung des Konzentrators.

Die bisher verwendeten Verfahren zur Messung der örtlichen Steigungen der Konzentratoren von solarthermischen Kraftwerken sind entweder unzureichend genau und zeitaufwändig oder sie sind auf relativ kleine Flächen begrenzt und bei großen Flächen wiederum sehr zeitaufwändig. Um die Messung großer Kollektorflächen und ganzer Kollektorfelder zu ermöglichen, werden einfache und schnelle Messverfahren benötigt, die flächig messen können. Solche Verfahren stehen bisher nicht zur Verfügung.

Der Erfindung liegt die Aufgabe zugrunde, ein Verfahren zur Vermessung eines solarthermischen Konzentrators anzugeben, das eine flächige Auswertung ermöglicht und bei geringem Zeitaufwand auch für große Spiegelflächen wirtschaftlich einsetzbar ist.

Das erfindungsgemäße Verfahren ist durch den Patentanspruch 1 bzw. 11 definiert.

Hiernach ist vorgesehen, dass aus dem Bildvergleich die Flächennormalen zur Reflexionsebene an verschiedenen Stellen des Konzentrators ermittelt werden und dass die Steigungen der Flächennormalen mit den Sollsteigungen einer Idealform des Konzentrators verglichen werden.

Erfindungsgemäß wird die Spiegelung von definierten Mustern ausgenutzt. Damit besteht die Möglichkeit, sogar ganze Kollektorfelder zu vermessen. Die Erfindung ermöglicht es, ohne großen Aufwand die Oberflächensteigungen großer Flächen flächig zu messen. Durch die Messung gespiegelter strukturierter Muster des Targets und unter Ausnutzung der abbildenden Eigenschaften von Parabolkonzentratoren erlaubt das Verfahren es, mit sehr geringem zeitlichen und materiellen Aufwand die örtlichen Steigungen der spiegelnden Oberfläche mit hoher Genauigkeit und hoher örtlicher Auflösung zu messen. Die Erfindung beruht auf der Vermessung der örtlichen Steigungen von Konzentratoren solarthermischer Kraftwerke auf der Basis von in der Spiegeloberfläche reflektierten Mustern bzw. Linien. Das Verfahren nutzt die abbildenden Eigenschaften der Konzentratoren aus. Bei geeigneter Wahl von Abstand und Ausrichtung des Targets in Bezug auf den Konzentrator kann das Target sehr klein gehalten werden. Dies wiederum erlaubt es, ein einfaches Target in Form einer bedruckten Platte oder eines Papiers zu verwenden, das keine Modifizierung des Konzentrators erfordert und die Messung nicht stört.

Die Erfindung ist sowohl bei Dish-Konzentratoren als auch bei Parabolrinnen-Konzentratoren sowie bei Heliostatfeldern anwendbar.

Gemäß einer bevorzugten Ausgestaltung der Erfindung weist das Target unterschiedliche Farbstreifen auf. Die Farbstreifen sind vorzugsweise geradlinig und parallel zueinander angeordnet. Sie können auch aus Längs- und Querstreifen bestehen. Die Farbstreifen erlauben eine eindeutige automatische Zuordnung der Farben bei der Bildauswertung. Im Falle einer Distorsion der Reflexionsfläche werden die Streifen im Abbild verzerrt. Durch Lokalisierung der Streifen kann das Maß der Distorsion und somit die Abweichung der Flächennormalen ermittelt werden. Zweckmäßigerweise wird ein Streifenmuster verwendet, bei dem die Streifen mit im HSI-Farbraum aufsteigendem H-Wert angeordnet sind. Dies erlaubt eine eindeutige automatische Zuordnung der Farben bei der Bildauswertung. Die Breite der Streifen kann an die jeweiligen Konzentratoreigenschaften angepasst werden. Bei Vermessung eines Paraboldishes können die Streifen nach außen hin breiter werden, da der Beobachtungswinkel nach außen flacher wird.

Als Target können auch Gegenstände benutzt werden, wie beispielsweise die Kanten eines Absorberrohrs bei einem Parabolrinnenkollektor oder eine Kante oder Linie des Turms eines Heliostatkraftwerks oder der Horizont. Falls als Target nur eine Linie benutzt wird, erfolgt ein Scannen durch Bewegen des Konzentrators in Querrichtung zu dieser Linie. Im Falle eines Farbfeldes aus zahlreichen verschiedenfarbigen Streifen kann die Bildauswertung in einem Schritt erfolgen.

Die Vermessung der Spiegelform erfolgt durch Computer-Bildauswertung der Fotos des Spiegelbildes eines linienförmigen Gegenstandes (Target). Zur trigonometrischen Zuordnung von Bildpunkten und Objektgeometrie wird ein geeigneter Algorithmus zur Bilderkennung benutzt. Der Algorithmus dient zur Umrechnung des Abbildes in flächig aufgelöste Reflexionswinkel bzw. Brechungswinkel. Dies funktioniert auch für nicht-stetige spiegelnde Oberflächen.

Zur einfachen und schnellen Bestimmung der Entfernungen zwischen Target und Absorber ist die Verwendung eines Laserentfernungsmessers zu empfehlen. Die Aufnahmen des Konzentrators mit Abbild des Targets werden mit einer Digitalkamera durchgeführt. Es ist natürlich auch möglich, ein Analogbild zu erzeugen, das anschließend digitalisiert wird. Zur vereinfachten Ausrichtung des Konzentrators zur Kamera kann im Zentrum des Targets eine Markierung angebracht sein.

Aus den gemessenen Flächennormalen bzw. deren Steigungen werden durch einen iterativen Algorithmus die Fokallänge, der mittlere Steigungsfehler und die Verkippung des Konzentrators zur Beobachtungsrichtung direkt ermittelt. Als Referenz dient eine Idealparabel mit freien Parametern f, $x_{kipp}$, $y_{kipp}$.

Im Folgenden werden anhand der Zeichnungen Ausführungsbeispiele der Erfindung näher erläutert.

Es zeigen:

Fig. 1     ein Beispiel der Auswirkungen einer Formabweichung des Konzentrators,

Fig. 2     die Messung an einem Konzentrator in Form eines Paraboldishes,

Fig. 3     ein Beispiel für ein Farbtarget,

Fig. 4     das Abbild des mit senkrechten Streifen ausgerichteten Targets, zur Messung von Formabweichungen in x-Richtung,

Fig. 5     ein Abbild des Targets mit horizontal ausgerichteten Farbstreifen zur Ermittlung von Formabweichungen in y-Richtung,

Fig. 6     das vom Computer erzeugte Abbild unter Lokalisierung der Formabweichung des Konzentrators,

Fig. 7     ein Diagramm zur Erläuterung des an einem Paraboldish verwendeten Koordinatensystems,

Fig. 8     ein Diagramm der Vektoren für das Reflexionsgesetz, und

Fig.9     einen von Fig. 2 abweichenden Messaufbau mit verkürztem Messabstand.

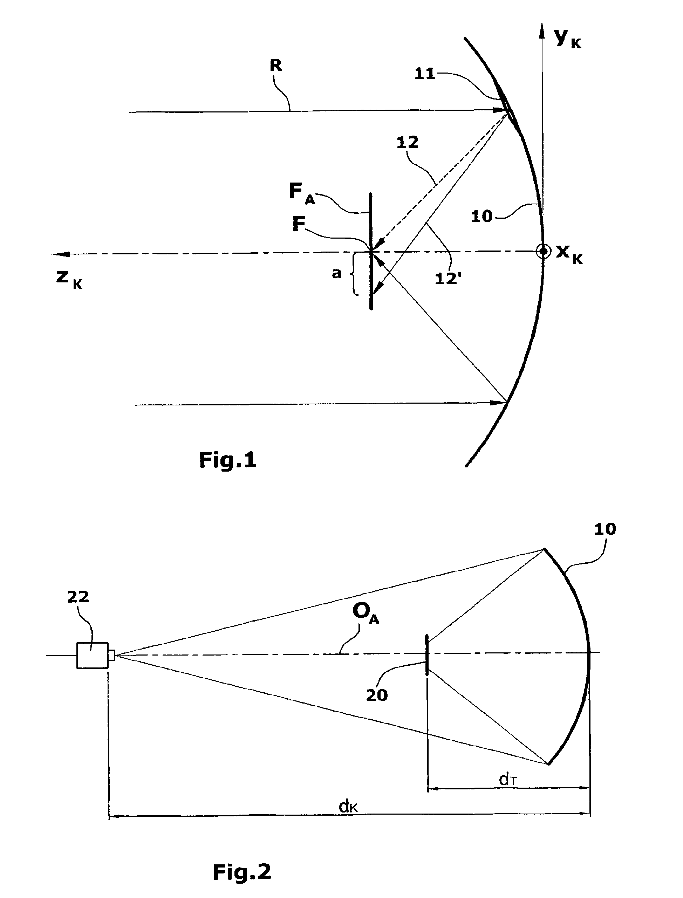

In Fig. 1 ist ein Konzentrator 10 dargestellt, bei dem es sich hier um ein Paraboldish handelt. Das Koordinatensystem ist so gewählt, dass der 0-Punkt im Scheitelpunkt des Konzentrators liegt. Die Achse $x_K$ verläuft horizontal durch den Scheitelpunkt und die Achse $y_K$ verläuft vertikal durch den Scheitelpunkt. Hierzu senkrecht verläuft die Achse $z_K$, die die optische Achse des Systems bildet. Der Index K bedeutet jeweils "Konzentrator".

Der Konzentrator weist eine Brennebene $F_A$ auf, die durch den Brennpunkt F hindurchgeht und den Abstand f (Brennweite) zum Konzentrator hat. Parallel einfallende Strahlung R wird von dem Konzentrator auf den Brennpunkt F konzentriert.

Durch die Formabweichung 11 wird an dieser Stelle der Strahl 12 nicht in den Brennpunkt F reflektiert, sondern als Strahl 12' an eine hiervon abweichende Stelle in der Brennebene $F_A$. Die Abweichung vom Brennpunkt F ist mit a bezeichnet.

Fig. 2 zeigt den Messaufbau zur Vermessung des Konzentrators 10. Dieser ist hier ebenfalls ein Paraboldish. Vor dem Konzentrator 10 wird ein Target 20 angeordnet und hinter dem Target 20 wird eine Kamera 22 positioniert. Target und Kamera liegen beide auf der optischen Achse OA, die durch den Scheitelpunkt des Konzentrators 10 hindurchgeht. Der Abstand $d_T$ des Target 20 vom Scheitelpunkt des Konzentrators 10 ist annähernd gleich der Brennweite f des Konzentrators. Der Abstand $d_K$ vom Scheitelpunkt des Konzentrators ist viel größer als f und beträgt beispielsweise etwa 50 f. Die Abstände $d_T$ und $d_K$ werden mit einem Laser-Entfernungsmesser mit hoher Genauigkeit gemessen. Retroreflektierende Targets erhöhen das Empfangssignal des Laserentfernungsmessers bei großen Entfernungen.

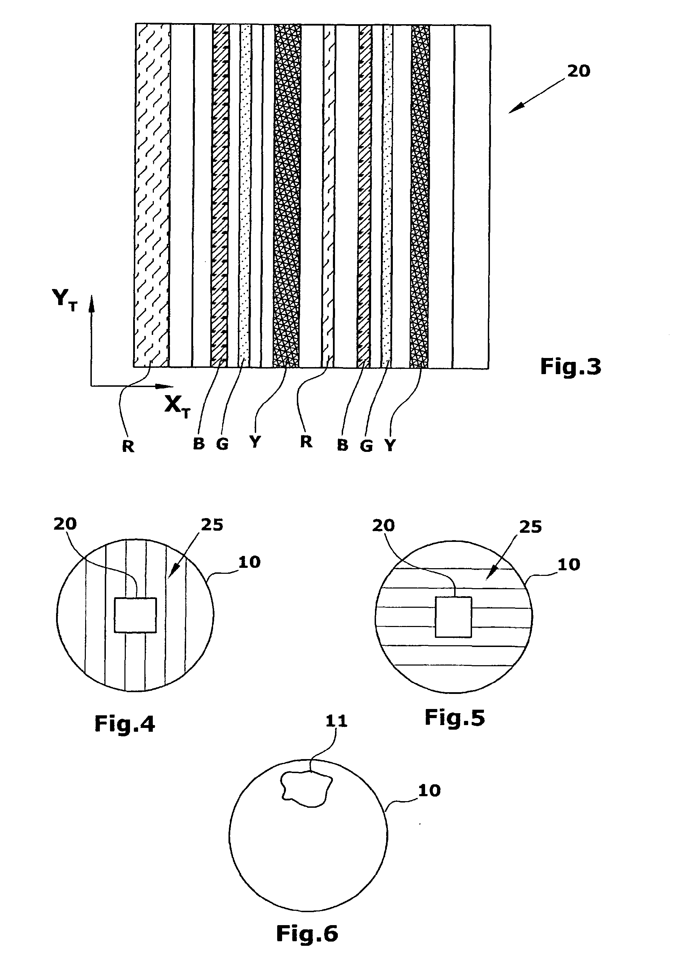

Das Target 20 ist beispielsweise ein Blatt Papier mit mindestens einem Strich. Ein Beispiel für das Target 20 ist in Fig. 3 dargestellt. Die Flächennormale des Target 20 verläuft parallel zur optischen Achse OA des Konzentrators.

Fig. 3 zeigt den Aufbau des Targets 20 aus zahlreichen farbigen Streifen. Die Streifen bilden das Koordinatensystem $x_T$ und $y_T$, wobei der Index T das "Target" bezeichnet. Die Farbstreifen sind in dem Target mit im HSI-Farbraum im H-Wert aufsteigenden Farben angeordnet, wobei die Farben rot, blau, grün und gelb mit R, B ,G und Y bezeichnet sind. Bei den nicht bezeichneten Farbstreifen handelt es sich jeweils um Zwischenfarben. Die Farben können sich zyklisch wiederholen. Die Streifen sind in der Bildmitte schmaler und werden nach außen breiter.

Fig. 4 zeigt das von der Kamera 22 aufgenommene Abbild 25, das von einem idealen Konzentrator 10 erzeugt wird, dessen Flächenverlauf einer Parabel entspricht. Dabei ist die Rückseite des Targets 20 erkennbar, während in dem Abbild 25 die reflektierten vertikalen Streifen des Target sichtbar sind. Würde das Target eine Formabweichung aufweisen, würden die Streifen deformiert sein.

In der Fig. 5 ist das Target 20 um 90 Grad gedreht, so dass die Streifen nunmehr horizontal ausgerichtet sind. In jedem der beiden Bilder werden die Deformierungen bei einer Spektralauswertung im Computer erkennbar. Die Abbildungen in den Figuren 4 und 5 werden nacheinander aufgenommen und miteinander koordiniert.

Fig. 6 zeigt eine vom Computer ermittelte Bilddarstellung des Konzentrators, wobei die Abweichungen von den idealen Steigungen des Konzentrators als Steigungsabweichung 11 dargestellt sind. Aus den Oberflächensteigungen kann durch Integration die Konzentratorform errechnet werden.

Mit dem aus Farbstreifen bestehenden Streifenmuster wird erreicht, dass die gesamte Fläche des Konzentrators in einem einzigen Bild bzw. in zwei Bildern ausgewertet werden kann. Alternativ besteht die Möglichkeit, ein Target mit einem einzigen Streifen abzubilden und diesen relativ zu dem Konzentrator zu verschieben, wobei sowohl eine schrittweise Bewegung des Targets als auch eine schrittweise Bewegung des Konzentrators quer zur Richtung des Striches erfolgen kann. Eine andere Möglichkeit besteht darin, einen Punkt des Targets zeilenweise über die Konzentratorfläche zu bewegen, ähnlich wie der Bildpunkt einer Fernsehröhre, und für jede Stelle des Bildschirms den zugehörigen Winkel der Flächennormalen zu ermitteln.

Durch die in Fig. 2 dargestellte Anordnung ergibt sich eine reduzierte Größe des benötigten Target 20 auf beispielsweise 50 cm x 50 cm bei einem Konzentratordurchmesser von 8,5 m. Es ergeben sich annähernd nur an denjenigen Stellen Datenlücken, durch Abdeckung des Konzentrators durch Gestänge, Target, Antriebe usw., an denen auch im Betrieb eine Abschattung der Sonnenstrahlen stattfindet.

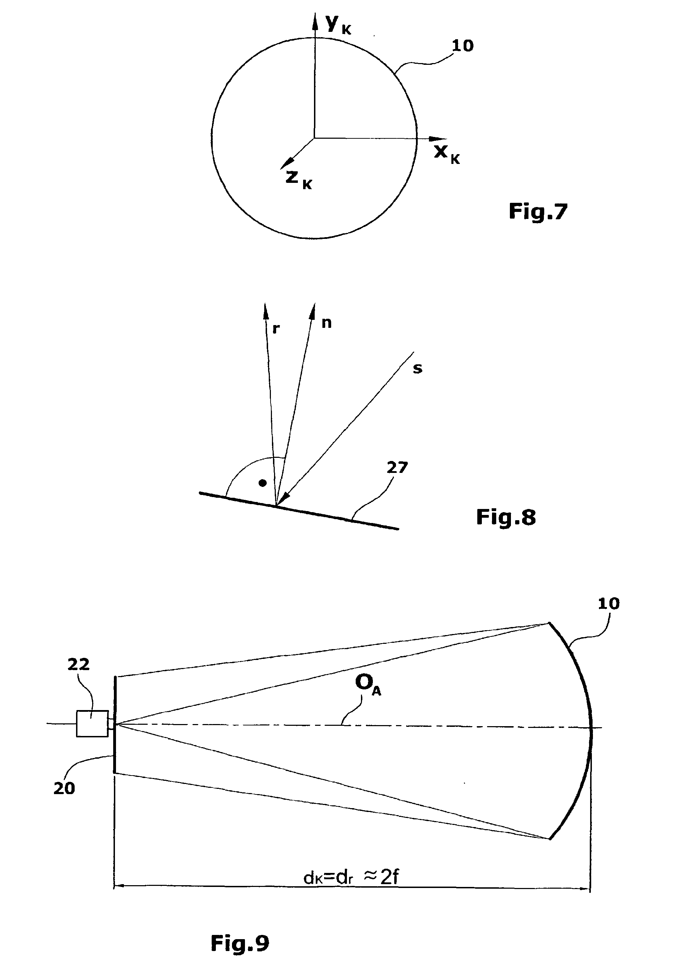

Fig. 7 zeigt das Koordinatensystem des Konzentrators 10, wobei der Scheitelpunkt des Konzentrators 10, der hier ein Dish ist, im Ursprungspunkt des Koordinatensystems liegt. Die Achse $x_K$ ist die horizontale Achse, die Achse $y_K$ ist die vertikale Achse und die Achse $z_K$ ist die Mittelachse, die hier mit der optischen Achse zusammenfällt.

Fig. 8 zeigt die Reflexionsverhältnisse an einem Spiegelelement 27 des Konzentrators. Die Flächennormale n ist ein Vektor, der senkrecht auf dem Flächenelement 27 steht, s bezeichnet den Vektor des einfallenden Strahls und r den Vektor des reflektierten Strahls.

Die örtlichen Steigungen n in horizontaler und vertikaler Richtung können mit den bekannten Positionen der Streifen auf dem Target ($x_T$, $y_T$), den gemessenen Abständen ($d_K$, $d_T$), der Position der Pixel im Konzentrator aus der örtlichen Kalibration ($x_K$, $y_k$) und der näherungsweise bekannten Konzentratorform (Normalparabel: $z_K = (x_K^2 + y_K^2)/(4*f)$) mit dem vektoriellen Reflexionsgesetz folgendermaßen berechnet werden:

$$n = \frac{r-s}{\left| r-s \right|} \qquad (1)$$

Mit:

$$r = \frac{1}{\sqrt{(-x_K + x_T)^2 + (-y_K + y_T)^2 + (d_T - z_K)^2}} \begin{bmatrix} -x_K + x_T \\ -y_K + y_T \\ d_T - z_K \end{bmatrix} \qquad (2)$$

$$(3)$$

$$s = \frac{1}{\sqrt{x_K^2 + y_K^2 + (z_K - d_K)^2}} \begin{bmatrix} x_K \\ y_K \\ z_K - d_K \end{bmatrix}.$$

Die so erhaltenen Steigungen werden mit den Sollsteigungen der Normalparabel mit freiem Parameter f verglichen und durch ein iteratives Verfahren mit Minimierung der Fehlerquadrate werden die tatsächliche Fokallänge f des gemessenen Konzentrators und die beiden Verkippungwinkel $x_{kipp}$ und $y_{kipp}$ in horizontaler und vertikaler Richtung zur idealen Ausrichtung bestimmt. Damit können die Messergebnisse und Abweichungen der lokalen Steigungen in aussagekräftiger Form dargestellt werden. Als allgemeine Gütezahl für den Vergleich verschiedener Konzentratoren kann $\sigma_{Gesamt}$ berechnet werden:

$$(4)$$

$$\sigma_{Gesamt} = \sqrt{\frac{\sum_{i=1}^{N} \left( R_{x,i}^2 + R_{y,i}^2 \right)}{N}}$$

Anstelle eines gedruckten Targets kann eine weiße Leinwand verwendet werden, auf die ein Projektor, der im Konzentrator befestigt ist, ein Streifenmuster in verschiedenen Breiten projiziert.

Fig. 9 zeigt ein Ausführungsbeispiel, bei dem der Kameraabstand $d_K$ gleich dem Targetabstand $d_T$ ist und ungefähr zwei f beträgt. Kamera und Target sind längs der optischen Achse angeordnet, wobei die Kamera 22 unmittelbar hinter dem Target 20 positioniert ist. Das Target hat ein Fenster in Form eines Loches in der Mitte, durch das die Kamera den Konzentrator 10 aufnimmt. Der Vorteil besteht darin, dass ein relativ geringer Messabstand (2f) ausreicht.

Das gleiche Messverfahren, das zuvor anhand von Dishes beschrieben wurde, kann auch bei Parabolrinnen und bei Heliostatfeldern angewandt werden. Bei einer Parabolrinne wird ein Farbtarget am Hüllrohr des Absorbers befestigt. Die Bilder werden aus großer Entfernung aufgenommen, so dass in der kompletten Aperturbreite des Konzentrators Farbstreifen reflektiert werden.

Falls nicht genügend Platz vorhanden ist, um mit der Kamera Bilder aufzunehmen, in denen die komplette Aperturbreite mit reflektierten Farbstreifen ausgefüllt ist, kann der Elevationswinkel des Konzentrators mit seinem Feinantrieb, der für das Nachführen entsprechend dem Sonnenstand vorgesehen ist, kontrolliert verstellt werden, wobei mehrere Bilder nacheinander aufgenommen werden. Dadurch können die Streifen über die gesamte Aperturbreite verschoben werden und es können die für die Berechnung notwendigen Informationen gesammelt werden.

Um den Zeitaufwand für die Vermessung ganzer Kollektorreihen weiter zu reduzieren, kann anstelle eines Farbtargets direkt das Absorberrohr als Referenzobjekt verwendet werden. In der Spiegelung sind zwei Linien, die Oberkante und die Unterkante, auf der gesamten Länge über mehrere Kollektormodule von jeweils 12 m eindeutig bestimmbar. Durch kontrolliertes Verstellen des Elevationswinkels des Kollektors mit seinem Feinantrieb und der Aufnahme mehrerer Bilder können die Linien über die gesamte Aperturbreite der Kamera verschoben werden und die für die Berechnung notwendige Information kann gewonnen werden. Mit dieser Variante können die für die Konzentration hauptsächlich verantwortlichen Steigungen der Flächennormalen in Querrichtung des Parabolrinnenkollektors gemessen werden, nicht aber die Steigungen der Flächennormalen in Längsrichtung. Für eine Messung der Steigungsfehler in Längsrichtung kann eine zweite Messung unter schrägem Winkel in der optischen Ebene erfolgen. Aus dem Vergleich mit der ersten Messung können die Fehler in Längsrichtung rechnerisch bestimmt werden.

Das gleiche Messverfahren kann verwendet werden, um die Heliostate eines Heliostatfeldes zu vermessen. Hierzu wird, falls eine weiße Fläche von der Größe der zu vermessenden Heliostaten am oder in der Nähe des Turms vorhanden ist, auf dem sich der Absorber befindet, ein Streifenmuster bei Nacht projiziert und mit einer Kamera vom Turm wird die Reflexion am Heliostaten aufgenommen. Die Messung der Distanzen, die Ausrichtung des Konzentrators und die Auswertung erfolgen gleich wie bei der oben beschriebenen Vorgehensweise.

Falls keine weiße Fläche zur Verfügung steht, können zwei definierte, zueinander senkrecht stehende Kanten angesteuert werden, z. B. die Turmkante, ein Strommast, der Horizont oder Ähnliches, und die Reflexion kann durch kontrolliertes Verstellen der Elevation oder des Azimuts des Heliostaten über seine gesamte Spiegelfläche bewegt werden. Aus mehreren Bildern, die dabei aufgenommen werden, kann bei bekannten Abständen die gesuchte Information berechnet werden. Diese Vorgehensweise kann auch für zahlreiche Heliostaten gleichzeitig durchgeführt werden.

Die Messmethode kann in gleicher Weise auch eingesetzt werden, um einzelne Facetten in der Qualitätskontrolle bei der Herstellung zu vermessen. Hierzu wird für linienfokussierende Facetten (Parabolrinne, linear Fresnel) ein Target mit Farbstreifen im Bereich der Fokallänge positioniert und Fotos aus größerer Entfernung in der optischen Achse gemacht. Das Target muss in der nicht konzentrierenden Richtung etwas länger sein als die Facette und in der Querrichtung abhängig von der Konzentratorgüte und der Entfernung der Kamera, etwa die 2- bis 3-fache Breite des Absorberrohrdurchmessers haben. Um die beiden senkrecht stehenden Muster schnell hintereinander fotografieren zu können, kann das Target um seine Längsachse drehbar sein und auf Vorder- und Rückseite die beiden verschiedenen Muster haben. Eine Einrastung in der jeweiligen Messposition muss vorgesehen werden, um eine eindeutige Positionierung zu erlauben. Wenn ein festgelegter Aufbau mit unveränderlicher Halterung für die Facetten benutzt wird, müssen die für die Auswertung benötigten Entfernungen nur einmal gemessen werden.

Für punktfokussierende Facetten bietet sich eine Positionierung in der Entfernung 2f wie bei den Parabolkonzentratoren für Dish-/Stirling-Systeme beschrieben an. Die Vorgehensweise ist dann übertragbar.

Um in einem Kollektorfeld eines kommerziellen Parabolrinnen-Kraftwerks mit mehreren hunderttausend Quadratmetern Spiegelfläche und dicht beieinander stehenden Kollektorreihen eine Messung der Spiegelqualität durchzuführen, kann die Messung aus der Luft gemacht werden. Dazu werden alle Kollektoren senkrecht nach oben ausgerichtet (das hat den zusätzlichen Vorteil einer ähnlichen Ausrichtung der Kollektoren bei der Messung wie beim Betrieb). Mit einem geeigneten Fluggerät (Ballon, Helikopter, o. ä.) wird das Feld langsam in einer Höhe von etwa 100 f überflogen und mit einer Digitalkamera werden Aufnahmen von der Spiegelung des Absorberrohrs wie oben beschrieben gemacht. Durch ein geeignetes Messgerät (Tachymeter mit automatischer Zielverfolgung, differentielles GPS, o. ä.) wird die absolute Position der Kamera zu den Zeitpunkten der Bildaufnahme gemessen. Die Positionen der Kollektorreihen sind bekannt. Mit dieser Information und der Information aus der Bildauswertung können die Oberflächensteigungen der Spiegel des gesamten Feldes wie oben beschrieben berechnet werden. Durch Ermittlung des durchschnittlichen Steigungsfehlers oder durch die Berechnung des Interceptwertes (Intercept ist der Anteil der reflektierten Strahlung, die auf den Absorber trifft) des kompletten Feldes durch eine Simulation basierend auf den Messergebnissen und anschließenden Vergleich mit den Design-Werten, könnte diese Prozedur als Qualitäts-Abnahmeverfahren beim Bau von kommerziellen Parabolrinnen-Kraftwerken verwendet werden.

Werden für eine solche Abnahmeprüfung viele Aufnahmen angefertigt, so kann die Messung der Kameraposition auch durch das Verfahren der Nahbereichs-Photogrammetrie erfolgen. Dabei können die für die Konzentratoranalyse gemachten Aufnahmen zur Vermessung des Kamerastandortes und zugleich zur geometrischen Vermessung des Kollektorfeldes benutzt werden. Nach einer photogrammetrischen Auswertung der Aufnahmen liegen die relativen Koordinaten der Kamerastandorte zum Kollektorfeld und die relativen Koordinaten der einzelnen Konzentratoren zum Ortskoordinatensystem vor. Bei genügend genauen Photogrammetrie-Messungen (eine Messgenauigkeit von bis zu 1: 200 000 ist derzeit erreichbar) können damit die Messungen der Spiegelqualität verbessert und gleichzeitig weitere geometrische Eigenschaften des Kollektorfeldes ermittelt und überprüft werden (z. B. Montagegenauigkeit der Absorberrohre in jedem Kollektormodul, Kontrolle der Pylon- und Achsenpositionen). Das Verfahren ist prinzipiell auch auf Heliostatenfelder von solarthermischen Turmkraftwerken anwendbar.

**Patentansprüche**

1.  Verfahren zur Vermessung eines solarthermischen Konzentrators, mit den Schritten

    - Anordnen eines mit Strukturen versehenen optischen Targets (20), annähernd in der Brennebene des Konzentrators (10),
    - Aufnehmen mindestens eines vom Konzentrator (10) durch Reflexion erzeugten Abbildes (25) des Targets (20) als Pixelbild,

    wobei die auf dem Target (20) vorgesehene Struktur mindestens eine gerade Linie hat und **dadurch gekennzeichnet, dass** Abbilder des Targets in zwei zueinander senkrechten Orientierungen aufgenommen werden, wobei die folgenden Schritte durchgeführt werden:

    - Zuordnen der im Abbild sichtbaren Strukturen zu den Koordinaten im Ursprungsbild des Targets,
    - Rechnerische Ermittlung der Flächennormalen (n) zur Reflexionsebene an verschiedenen Stellen des Konzentrators aus der eindeutigen Zuordnung der abgebildeten Strukturen,
    - Vergleichen der Steigungen der Flächennormalen mit den Sollsteigungen einer Idealform des Konzentrators.

2.  Verfahren nach Anspruch 1, wobei das Target jeweils senkrecht zur Richtung der Linie geschwenkt und diese Schwenkung mit einem Drehgeber gemessen wird.

3. Verfahren nach Anspruch 1 oder 2, wobei das Target (20) unterschiedliche Farbstreifen aufweist.

4. Verfahren nach einem der Ansprüche 1 - 3, wobei eine Kamera (22) zur Erzeugung des Abbildes (25) des Targets (20) in einem Abstand vom Konzentrator (10) angeordnet wird, der wesentlich größer ist als die Brennweite (f) des Konzentrators, wodurch eine Reduzierung der benötigten Größe des Targets bewirkt wird.

5. Verfahren nach einem der Ansprüche 1 - 4, wobei der Konzentrator (10) eine langgestreckte Parabolrinne ist, in deren Brennlinie ein Absorberrohr verläuft, und dass als Target (20) ein Absorberrohr benutzt wird und der Konzentrator zur Durchführung einer flächigen Auswertung unter Kontrolle durch einen Drehgeber geschwenkt wird.

6. Verfahren nach einem der Ansprüche 1, 3 oder 4, wobei der Konzentrator (10) aus zahlreichen Heliostaten besteht, die auf einen auf einem Turm befestigten Absorber gerichtet sind, wobei als Target eine Linie oder Kante des Turmes oder sonstige Linien oder Kanten benutzt wird.

7. Verfahren nach einem der Ansprüche 1 - 6, wobei das Target (20) aus einer bedruckten Platte besteht, die vorübergehend an einem Absorber zum Absorbieren der von dem Konzentrator reflektierten Solarstrahlung befestigt wird.

8. Verfahren nach einem der Ansprüche 1 - 7, wobei der Konzentratorwinkel und/oder die Position einer das Abbild (25) erzeugenden Kamera (22) in definierten Schritten verändert wird und dabei die Fläche des Konzentrators (10) abgescannt wird, um die Flächennormalen (n) an den verschiedenen Stellen zu ermitteln.

9. Verfahren nach einem der Ansprüche 1 - 8, wobei das Vergleichen durch ein iteratives Verfahren mit Minimierung der kleinsten Fehlerquadrate erfolgt.

10. Verfahren nach einem der Ansprüche 1 - 9, wobei Aufnahmen zahlreicher senkrecht nach oben ausgerichteter Konzentratoren aus der Luft aufgenommen werden, um die Steigungen der Flächennormalen an sämtlichen Konzentratoren gleichzeitig zu ermitteln.

11. Verfahren zur Vermessung eines solarthermischen Konzentrators, wobei der Konzentrator (10) eine Brennweite (f) aufweist, mit den Schritten

- Anordnen eines mit Strukturen versehenen optischen Targets (20), ungefähr im Abstand 2 f vom Konzentrator (10),
- Aufnehmen mindestens eines vom Konzentrator (10) durch Reflexion erzeugten Abbildes (25) des Targets (20) als Pixelbild,

wobei die auf dem Target (20) vorgesehene Struktur mindestens eine gerade Linie hat
**dadurch gekennzeichnet, dass**
eine Kamera (22) zur Erzeugung des Abbildes (25) des Targets ungefähr im Abstand 2 f vom Konzentrator (10) angeordnet wird, wodurch eine Reduzierung der benötigten Größe des Targets (20) bewirkt wird,
und Abbilder des Targets in zwei zueinander senkrechten Orientierungen aufgenommen werden, wobei die folgenden Schritte durchgeführt werden:

- Zuordnen der im Abbild sichtbaren Strukturen zu den Koordinaten im Ursprungsbild des Targets,
- Rechnerische Ermittlung der Flächennormalen (n) zur Reflexionsebene an verschiedenen Stellen des Konzentrators aus der eindeutigen Zuordnung der abgebildeten Strukturen,
- Vergleichen der Steigungen der Flächennormalen mit den Sollsteigungen einer Idealform des Konzentrators.

12. Verfahren nach Anspruch 11, wobei das Target jeweils senkrecht zur Richtung der Linie geschwenkt und diese Schwenkung mit einem Drehgeber gemessen wird.

13. Verfahren nach Anspruch 11 oder 12, wobei das Target (20) unterschiedliche Farbstreifen aufweist.

14. Verfahren nach einem der Ansprüche 11 oder 13, wobei der Konzentrator (10) aus zahlreichen Heliostaten besteht, die auf einen auf einem Turm befestigten Absorber gerichtet sind, wobei als Target eine Linie oder Kante des Turmes oder sonstige Linien oder Kanten benutzt wird.

15. Verfahren nach einem der Ansprüche 11 - 14, wobei der Konzentratorwinkel und/oder die Position einer das Abbild (25) erzeugenden Kamera (22) in definierten Schritten verändert wird und dabei die Fläche des Konzentrators (10) abgescannt wird, um die Flächennormalen (n) an den verschiedenen Stellen zu ermitteln.

**Claims**

1. Method for measuring a solar thermal concentrator, comprising the steps of

   - arranging an optical target (20) provided with structures approximately in the focal plane of the concentrator (10),
   - recording, as a pixel image, at least one image (25) of the target (20) generated by the concentrator (10) by reflection therefrom,

   wherein the structure provided on the target (20) comprises at least one straight line,
   **characterized in that**
   images of the target are taken under two mutually perpendicular orientations, with the following steps being performed:

   - assigning the structures visible in the image to the coordinates in the original image of the target,
   - calculating the surface normal (n) to the reflection plane at various positions on the concentrator from the unambiguous assignment of the pictured structures,
   - comparing the gradients of the surface normal with the rated gradients of an ideal form of the concentrator.

2. The method of claim 1, wherein the target is respectively pivoted perpendicularly to the direction of the line and the pivoting is measured using a rotary encoder.

3. The method of claim 1 or 2, wherein the target (20) comprises different color stripes.

4. The method of one of claims 1 - 3, wherein a camera (22) is arranged at a distance from the concentrator (10) to generate an image (25) of the target (20), the distance being substantially larger than the focal length (f) of the concentrator, whereby a reduction of the required target size is effected.

5. The method of one of claims 1-4, wherein the concentrator (10) is an elongate parabolic groove, in whose focal line an absorber tube extends, and wherein the target (20) used is an absorber tube and the concentrator is pivoted under control of a rotary encoder in order to perform a two-dimensional evaluation.

6. The method of one of claims 1, 3 or 4, wherein the concentrator (10) is formed by a plurality of heliostats pointed to an absorber mounted on a tower, a line or edge of the tower or other lines or edges being used as the target.

7. The method of one of claims 1-6, wherein the target (20) is a printed plate that is temporarily mounted to an absorber to absorb the solar radiation reflected from the concentrator.

8. The method of one of claims 1-7, wherein the concentrator angle and/or the position of a camera (22) generating the image (25) is changed in defined steps as the surface of the concentrator (10) is scanned in order to determine the surface normals (n) at the various points.

9. The method of one of claims 1-8, wherein the comparison is performed by means of an iterative process with minimization of the least squares.

10. The method of one of claims 1-9, wherein pictures of a plurality of upward concentrated concentrators are taken from the air, in order to determine the gradients of the surface normals for all concentrators at the same time.

11. Method for measuring a solar thermal concentrator, the concentrator (10) having a focal length (f), the method comprising the steps of

    - arranging an optical target (20) provided with structures approximately at a distance of 2f from the concentrator (10),
    - recording, as a pixel image, at least one image (25) of the target (20) generated by the concentrator (10) by reflection therefrom,

wherein the structure provided on the target (20) comprises at least one straight line,
**characterized in that**
a camera (22) is arranged approximately at a distance of 2f from the concentrator (10) to generate the image (25) of the target, whereby a reduction of the required size of the target (20) is effected,
and images of the target are taken under two mutually perpendicular orientations, with the following steps being performed:

- assigning the structures visible in the image to the coordinates in the original image of the target,
- calculating the surface normal (n) to the reflection plane at various positions on the concentrator from the unambiguous assignment of the pictured structures,
- comparing the gradients of the surface normal with the rated gradients of an ideal form of the concentrator.

12. The method of claim 11, wherein the target is respectively pivoted perpendicularly to the direction of the line and the pivoting is measured using a rotary encoder.

13. The method of claim 11 or 12, wherein the target (20) comprises different color stripes.

14. The method of one of claims 11 or 13, wherein the concentrator (10) is formed by a plurality of heliostats pointed to an absorber mounted on a tower, a line or edge of the tower or other lines or edges being used as the target.

15. The method of one of claims 11-14, wherein the concentrator angle and/or the position of a camera (22) generating the image (25) is changed in defined steps as the surface of the concentrator (10) is scanned in order to determine the surface normals (n) at the various points.

**Revendications**

1. Procédé de mesure d'un concentrateur solaire thermique, comprenant les étapes suivantes :

- mise en place d'une cible optique (20) pourvue de structures, sensiblement dans le plan focal du concentrateur (10),
- prise d'au moins une image (25) de la cible (20), produite par réflexion par le concentrateur (10) sous forme d'image en pixels,

dans lequel la structure prévue sur la cible (20) présente au moins une ligne droite et **caractérisé en ce que** des images de la cible sont prises dans deux orientations perpendiculaires l'une à l'autre, les étapes suivantes étant réalisées :

- affecter des structures visibles sur l'image aux coordonnées de l'image d'origine de la cible,
- déterminer par calcul les normales à la surface (n) par rapport au plan de réflexion en différents endroits du concentrateur à partir de l'affectation univoque des structures représentées,
- comparer les pentes des normales à la surface aux pentes théoriques d'une forme idéale du concentrateur.

2. Procédé selon la revendication 1, dans lequel on fait pivoter la cible respectivement perpendiculairement à la direction de la ligne et on mesure ce pivotement au moyen d'un capteur rotatif.

3. Procédé selon la revendication 1 ou 2, dans lequel la cible (20) présente différentes bandes colorées.

4. Procédé selon l'une des revendications 1 à 3, dans lequel une caméra (22) destinée à produire l'image (25) de la cible (20) est disposée à une distance du concentrateur (10) sensiblement plus grande que la longueur focale (f) du concentrateur, ce qui opère une réduction de la grandeur requise de la cible.

5. Procédé selon l'une des revendications 1 à 4, dans lequel le concentrateur (10) est une gouttière parabolique de forme allongée, dans la ligne focale de laquelle s'étend un tube absorbeur, et dans lequel on utilise un tube absorbeur comme cible (20) et on fait pivoter le concentrateur pour exécuter une évaluation 2D sous contrôle d'un capteur rotatif.

**6.** Procédé selon l'une des revendications 1, 3 ou 4, dans lequel le concentrateur (10) est constitué de nombreux héliostats qui sont dirigés sur un absorbeur fixé sur une tour, une ligne ou un bord de la tour ou autres lignes ou bords étant utilisés comme cible.

**7.** Procédé selon l'une des revendications 1 à 6, dans lequel la cible (20) est constituée d'une plaquette imprimée qui est fixée provisoirement sur un absorbeur pour absorber le rayonnement solaire réfléchi par le concentrateur.

**8.** Procédé selon l'une des revendications 1 à 7, dans lequel on fait varier l'angle du concentrateur et/ou la position d'une caméra (22) produisant l'image (25) selon des incréments définis et on balaye alors la surface du concentrateur (10) pour déterminer les normales à la surface (n) aux différents endroits.

**9.** Procédé selon l'une des revendications 1 à 8, dans lequel la comparaison est opérée par une procédure itérative avec réduction au minimum des moindres carrés.

**10.** Procédé selon l'une des revendications 1 à 9, dans lequel des prises de vue de nombreux concentrateurs orientés perpendiculairement vers le haut sont effectuées sous forme de prises de vues aériennes pour déterminer simultanément les pentes des normales à la surface sur tous les concentrateurs.

**11.** Procédé de mesure d'un concentrateur thermique solaire, dans lequel le concentrateur (10) présente une longueur focale (f), comprenant les étapes suivantes :

- mise en place d'une cible optique (20) pourvue de structures, sensiblement à une distance 2 f du concentrateur (10),
- prise d'au moins une image (25) de la cible (20), produite par réflexion par le concentrateur (10) sous forme d'image en pixels,

dans lequel la structure prévue sur la cible (20) présente au moins une ligne droite,
**caractérisé en ce qu'**une caméra (22) destinée à produire l'image (25) de la cible est disposée sensiblement à une distance 2 f du concentrateur (10), ce qui opère une réduction de la grandeur requise de la cible (20),
et des images de la cible sont prises dans deux orientations perpendiculaires l'une à l'autre, les étapes suivantes étant réalisées :

- affecter les structures visibles sur l'image aux coordonnées de l'image d'origine de la cible,
- déterminer par calcul les normales à la surface (n) par rapport au plan de réflexion en différents endroits du concentrateur à partir de l'affectation univoque des structures représentées,
- comparer les pentes des normales à la surface aux pentes théoriques d'une forme idéale du concentrateur.

**12.** Procédé selon la revendication 11, dans lequel on fait pivoter la cible respectivement perpendiculairement à la direction de la ligne et on mesure ce pivotement au moyen d'un capteur rotatif.

**13.** Procédé selon la revendication 11 ou 12, dans lequel la cible (20) présente différentes bandes colorées.

**14.** Procédé selon l'une des revendications 11 ou 13, dans lequel le concentrateur (10) est constitué de nombreux héliostats qui sont dirigés sur un absorbeur fixé sur une tour, une ligne ou un bord de la tour ou autres lignes ou bords étant utilisés comme cible.

**15.** Procédé selon l'une des revendications 11 à 14, dans lequel on fait varier l'angle du concentrateur et/ou la position d'une caméra (22) produisant l'image (25) selon des incréments définis et on balaye la surface du concentrateur (10) pour déterminer les normales à la surface (n) aux différents endroits.

**Fig.1**

**Fig.2**

**Fig.3**

$Y_T$

$X_T$

R    B G  Y    R    B G Y

20

**Fig.4**

20    25    10

**Fig.5**

20    25    10

**Fig.6**

11    10

**Fig.7**

**Fig.8**

$d_K = d_r \approx 2f$

**Fig.9**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10056077 B4
- DE 3325919 A1
- DE 317148
- US 20040169725 A1
- DE 19643018 A1
- US 5309222 A
- JP 01165907 A

**In der Beschreibung aufgeführte Nicht-Patentliteratur**

- **ARASA J et al.** Concave reflective surfaces topographic inspection using robust non-contact techniques. *EMERGING TECHNOLOGIES AND FACTORY AUTOMATION, 1999. PROCEEDINGS. ETFA '99. 1999 7TH IEEE INTERNATIONAL CONFERENCE ON BARCELONA,* 18. Oktober 1999, vol. 2, 1147-1154
- **JEFFERIES K S ED.** CONCENTRATOR TESTING USING PROJECTED IMAGES. *PROCEEDINGS OF THE INTERSOCIETY ENERGY CONVERSION ENGINEERING CONFERENCE], NEW YORK, IEEE, US,* 04. August 1991, vol. 2, ISBN 978-0-89448-163-5, 84-89